# EUROPEAN PATENT APPLICATION

(11) **EP 2 508 927 A2**
(43) Date of publication of application: **10.10.2012**
(21) Application number: 12163014.9
(22) Date of filing: 03.04.2012
(51) Int. Cl.: G02B 6/44, G02B 6/50

(54) **Method for installing an optical waveguide unit, a kit of parts, and a bundle**

(30) Priority: 05.04.2011 NL 2006539
(71) Applicant: Draka Comteq B.V., 1083 HJ Amsterdam (NL)
(72) Inventor: Jonker, Jan Wigger, 9902 BK Appingedam (NL); Greven, Willem, 9933 AS Delfzijl (NL)
(74) Representative: Jansen, Cornelis Marinus

(57) **Abstract**

A method for installing an optical waveguide unit, comprising:
-providing a protective main duct (1);
-jointly feeding a plurality of hollow microducts (2) through the main duct (1); and
-feeding the optical waveguide unit (3) through a said microduct (2).

Also, there is provided a kit of parts, containing a plurality of hollow microducts (2) specifically configured for use in a method according to the invention. Further, there is provided a bundle of microducts, joined together by attachment means (5) around a central tension element (4).

## Description

The invention relates to a method for installing an optical waveguide unit.

It is known to install optical fiber cables using protective ducts. Particularly, in the Netherlands, since the nineties, a common way to lay optical fiber cables underground was to burry each optical fiber cable in a protective tube, usually having a diameter of about 3 cm.

Besides, it is know to blow optical fibers through respective so-called microducts. Reference is made to EP0108590A1, disclosing installing an optical fiber transmission line by first installing a conduit having one or more bores and subsequently inserting flexible, lightweight optical fiber members containing the optical fibers into the bores. The optical fiber members are propelled by employing the fluid drag of air, or another suitable gas, passed at high velocity through the bores.

Presently, there is a desire of replacing the afore-mentioned optical fiber cable/duct-system. It is know to feed a number of individual microducts separately into a main duct, wherein each microduct was propelled through the main duct using an air blowing technique. However, this known method did not render good results: only relatively small lengths of microduct could be blown into the main duct without jamming.

The present invention aims to solve or alleviate the above-mentioned problems. Particularly, the invention aims to provide a method that can achieve replacing afore-mentioned optical fiber cable/duct-system by the microduct-system in a very efficient and reliably manner, aiming at installing very long microduct sections in one go.

To this aim, according to an aspect of the invention, there is provided a method for installing an optical waveguide unit, the method comprising:
- providing a protective main duct;
- jointly feeding a plurality of hollow microducts through the main duct; and
   feeding the optical waveguide unit through a said microduct.

For example, the main duct can be a duct that is already in place, for example being at least partly buried underground (i.e. before feeding the plurality of hollow microducts there-through). It has been found that jointly feeding a plurality of hollow microducts through the main duct can be carried out smoothly, using very large duct lengths (over 500 m), for example a length of at least 1 km.

Besides, it has been found that the simultaneous feeding of the microducts through a main duct can be achieved swiftly, without the microducts blocking-up. This also holds in case there is relatively little transversal space (such as an internal diameter) in the main duct for receiving the plurality of microducts.

In a further embodiment, a bundle of microducts and respective waveguide units are to replace an optical cable that is initially located in the main duct.

For example, in a preferred embodiment, the main duct encloses a signal transmission line before the microducts are fed through the main duct, wherein the signal transmission line is removed from the main duct before and/or during installing the microducts in the main duct. In that case, in an extra-advantageous embodiment, the signal transmission line can be used as a pulling-means, for pulling the plurality of microducts through the main duct.

The signal transmission line may be an optical waveguide unit, for example a cable containing at least one optical fiber.

The microducts may be interconnected, for example in parallel. The interconnected microducts may be dragged through the main duct by a fluid drag force.

The plurality of hollow microducts may be positioned in a close-packed bundle, particularly in a mutually symmetrical relationship.

According to an aspect of the invention, the plurality of microducts is connected to an elongated element, particularly for reinforcing and/or mutually positioning the plurality of microducts, and for example for pulling the plurality of microducts through the main duct.

The elongated element may extend along at least part of the microducts, and preferably along the entire length if the microducts.

In a preferred embodiment, a part of the elongated element protrudes from the plurality of microducts, particularly from at least one end of the plurality of microducts.

The elongated element may e. g. extend substantially centrally with respect to the plurality of microducts.

The elongated element may e. g. be made of a fiber reinforced material, for example a fiber-reinforced plastic, for example a glass fiber reinforced polymer.

According to an embodiment, the microducts may be taped together.

According to an embodiment, a length of the joined microducts may e.g. be at least 0.5 km.

According to an embodiment, a length of the joined microducts may be at least 1 km.

Said optical waveguide unit may e.g. be propelled through a said microduct by a fluid flowing through the duct.

Accoding to a further embodiment, each of the microducts may have a predetermined external width, wherein the sum of the widths of the plurality of microducts is larger than a width of an inner space of the main duct, for example by at least 5% and particularly by at least 10%.

The method may include providing mutually separate microducts to form the plurality of microducts.

In a further embodiment, the plurality of microducts may include at least three microducts.

The invention also provides a kit of parts, containing a plurality of hollow microducts specifically configured for use in a method according to the invention. For example, the kit of parts can further include attachment means for joining the plurality of microducts. In a further embodiment, such attachment means may include tape, an elongated element, an adhesive, or any combination thereof. Particularly, the attachment means include an elongated element for reinforcing and/or mutually positioning the plurality of microducts.

Besides, there is provided a bundle of microducts, joined together by attachment means, for example a bundle to be used in a method according to the invention.

In an embodiment, a length of the bundle is at least 0.5 km, for example at least 1 km. Thus, relatively long main ducts (or long sections thereof) can be provided with a plurality of microducts in one go.

In a further preferred non-limiting embodiment, the microducts can be positioned in a close-packed bundle, thereby achieving a stable bundle that can be reliably pulled through a relatively narrow inner space of a main duct. Also, for example, the microducts may be positioned in a mutually symmetrical relationship.

To provide a reliable feeding of the bundle through the main duct, an elongated element may be used, the element for example extending through the bundle (for example between the ends of the microducts). Preferably, the element is made of a fiber reinforced material, for example a fiber-reinforced plastic, for example a glass fiber reinforced polymer.

The at least one elongated element (for example only one such element) preferably extends between the microducts.

The elongated element may e. g. extend centrally through the bundle.

According to a further embodiment, each of the microducts may be fixed to the elongated element by an adhesive.

According to a further embodiment, each of the microducts may have a maximum width of about 1 cm or less.

According to a further embodiment, the bundle may include at least tape, preferably self-adhesive tape, at least partly enclosing the plurality of microducts. The tape may e.g. have been wound around the plurality of microducts in at least one winding direction. In a further embodiment, the tape may extend along substantially the entire length of the bundle. Preferably, the tape is (or provides) a fluid drag force enhancer.

Further advantageous embodiments of the invention are described in the dependent claims. The invention will now be explained referring to a number of non-limiting embodiments, shown in the figures.
Figure 1 is a perspective view part of a main duct carrying a conventional cable;
Figure 2 is a similar perspective view of a section of a bundle of microducts according to an embodiment of the invention;
Figure 3 is a lateral cross-section of the bundle shown in Fig. 2, after two waveguide units have been fed into two of the microducts;
Figure 4 is similar to Fig. 1, schematically showing part of a method according to an embodiment of the invention;
Figure 5 is similar to Fig. 4, schematically showing an alternative method step according to an embodiment of the invention; and
Figure 6 is similar to Fig. 4, showing a further part of an embodiment according to the invention..

Similar or corresponding features are denoted by similar or corresponding reference signs in this patent application.

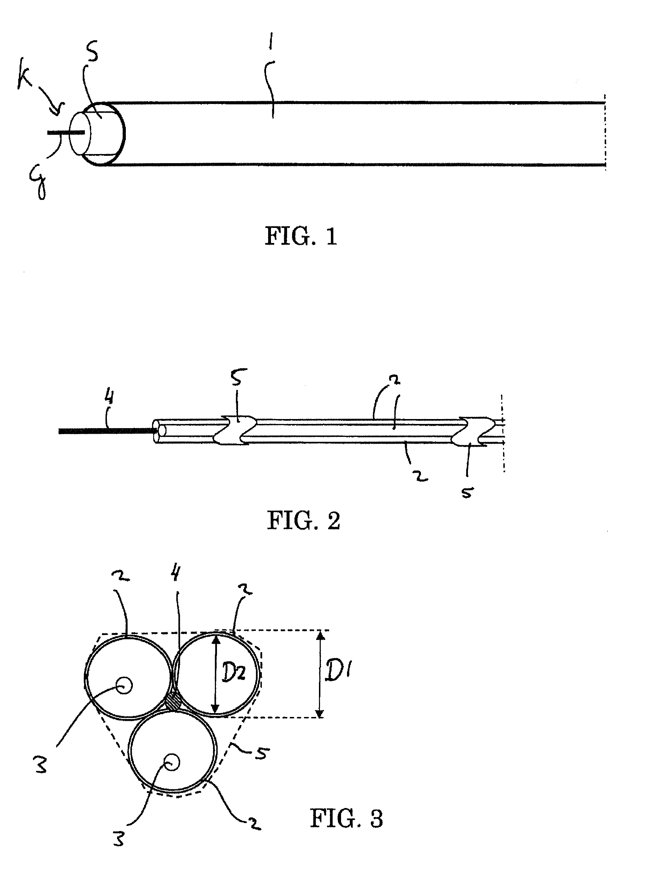

Figure 1 depicts part of a known protective main duct 1, protecting a signal transmission line K that has been laid therein, and holding the signal transmission line K along a desired, predetermined installation path.

For example, the main duct 1 can be installed at least partly underground, and serves to protect its content (line K) against potentially harmful matter from an environment, such as mechanical impact, chemicals, liquids and the-like.

In the example, the main duct 1 has a cylindrical configuration, having an inner surface with a circular cross-section. The main duct 1 can also be shaped differently, for example with an oval, trapezoid or otherwise angular cross-section.

According to a further embodiment, the main duct 1 can be relatively long, for example longer than 100 meter, particularly longer than 500 meter, for example at least 1 km. Other dimensions can also be used, such as a main duct 1 having a length in the range of 10 to 100 meter. Also, in a further embodiment, the main duct 1 can be made in one piece. Alternatively, the main duct 1 can be made from a plurality of duct sections joined together.

In a further embodiment, an external width of the main duct 1, in this case an outer diameter, can be smaller than 5 cm, for example in the range of 30-40 mm, such as about 32 mm. A thickness of the duct wall can be in the range of about 1 to 10 mm, for example about 3 to 4 mm. The width of the interior space of the duct 1, in this case an inner diameter, can be a number of millimeters smaller than the external width (for example about 25 mm in case the external width is about 32 mm). Other duct dimensions are also feasible.

The depicted signal transmission line K that is protected by the man duct 1 is a (usually flexible) long optical cable K, having a shield section S that encloses a single optical wave guide G. In a further embodiment, the signal transmission line K is longer than the main duct 1, and reaches through the entire main duct 1 (from a first duct end to an opposite second duct end). Particularly, as follows from the drawing, the signal transmission line K has been laid loosely in the main duct 1 (providing some lateral space between the outer surface of the cable K and the inner surface of the duct 1).

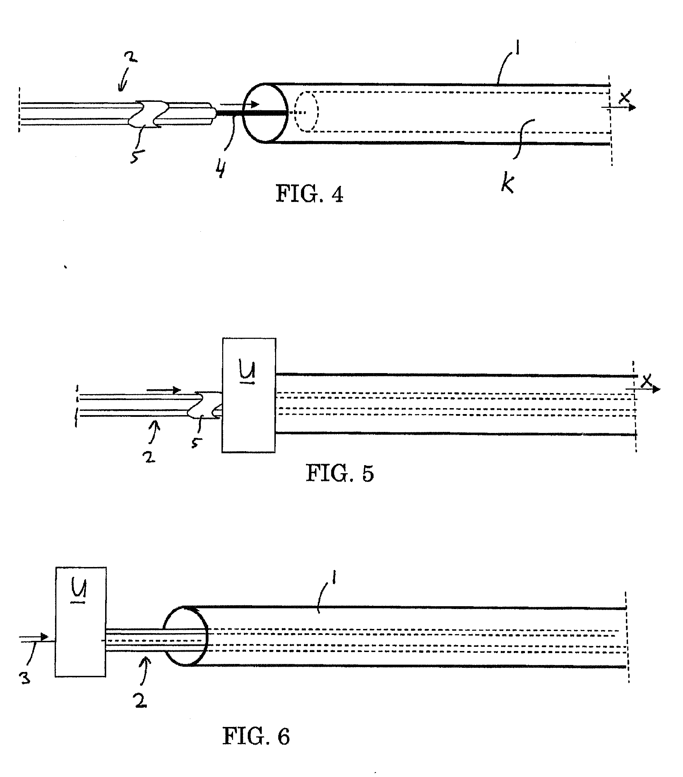

Advantageously, according to an embodiment of the present invention, the signal transmission cable K is being replaced by a plurality of microducts 2. Particularly, there is provided a method for installing a number of optical waveguide units 3, the method comprising providing the protective main duct 1 (see Figures 1, 4), and jointly feeding a plurality of hollow microducts 2 through the main duct 1. Subsequently, loose optical waveguide units 3 can be fed through said microducts 2.

It should be observed that the simultaneously feeding of the microducts 2 can also be carried out on a main duct 1 that does/did not include an optical cable K.

Two of the afore-mentioned wave guide units 3, in respective microducts 2, are schematically shown in Fig 3. Microducts 2 and respective optical waveguide units 3 as such are known. Each optical waveguide unit 3 that is to be used can be an optical fiber. For instance, said optical fiber may be deployed in either a single fiber loose buffer tube or a multi-fiber loose buffer tube. In other embodiments, the buffer tube may tightly surround an outermost optical fiber coating (i.e., tight buffered fiber) or otherwise surround an outermost optical fiber coating or ink layer to provide an exemplary radial clearance of between about 50 and 100 microns (i.e., a semi-tight buffered fiber). With respect to the former tight buffered fiber, the buffering may be formed by coating the optical fiber with a curable composition (e.g., a UV-curable material) or a thermoplastic material. The outer diameter of tight buffer tubes, regardless of whether the buffer tube is formed from a curable or non-curable material, is typically less than about 1,000 microns (e.g., either about 500 microns or about 900 microns). With respect to the latter semi-tight buffered fiber, a lubricant may be included between the optical fiber and the buffer tube (e.g., to provide a gliding layer).

An exemplary buffer tube enclosing optical fibers as disclosed herein may be formed of polyolefins (e.g., polyethylene or polypropylene), including fluorinated polyolefins, polyesters (e.g., polybutylene terephthalate), polyamides (e.g., nylon), as well as other polymeric materials and blends. In general, a buffer tube may be formed of one or more layers. The layers may be homogeneous or include mixtures or blends of various materials within each layer.

In this context, the buffer tube may be extruded (e.g., an extruded polymeric material) or pultruded (e.g., a pultruded, fiber-reinforced plastic). By way of example, the buffer tube may include a material to provide high temperature and chemical resistance (e.g., an aromatic material or polysulfone material).

Although buffer tubes typically have a circular cross section, buffer tubes alternatively may have an irregular or non-circular shape (e.g., an oval or a trapezoidal cross section).

Alternatively, one or more of the present optical fibers 3 may simply be surrounded by an outer protective sheath or encapsulated within a sealed metal tube. In either structure, no intermediate buffer tube is necessarily required.

Multiple optical fibers as disclosed herein may be sandwiched, encapsulated, and/or edge bonded to form an optical fiber ribbon. Optical fiber ribbons can be divisible into subunits (e.g., a twelve-fiber ribbon that is splittable into six-fiber subunits). Moreover, a plurality of such optical fiber ribbons may be aggregated to form a ribbon stack, which can have various sizes and shapes.

Generally, each of the fibers includes a fiber core and a respective cladding of glass, and one or more optional coatings. Optionally, the optical fiber may include an outermost ink layer. Also, a signal conductor can include a single fiber, for example having a respective external protective fiber coating.

Preferably, "bend-insensitive" optical waveguide units 3 (such as ITU-T G657 fibers) are applied, which may buckle (for example due to thermal fluctuations) or bend over a small radius with relatively little or no optical attenuation.

Regarding the microducts 2, known per se, those ducts 2 serve as relatively narrow elongated protective enclosures. They are configured to movably receive at least part of the elongated optical waveguide units 3.

For example, each microduct 2 can be a hollow tube or duct, for example made of plastic (for example High Density Polyethylene, HDPE), configured for loosely receiving a respective waveguide unit 3. Preferably, the external surface of the respective waveguide unit 3 is not attached to the internal surface of the microduct 2, such, that the respective waveguide unit 3 can be moved in longitudinal directions through the microduct. In the present example, the external microduct 2 may have a circular cross-section; the microduct's cross-section can also have a different shape, for example oval, rectangular, hexagonal, or differently.

Now referring to Fig. 3, in a further embodiment, a maximum external width, in this case the external diameter D1, of each microduct 2 can be about 20 mm, and particularly about 10 mm. In a further embodiment, a thickness of the microduct's wall can be about 1 to 2 mm. The microduct's wall encloses an internal waveguide receiving space, having an internal diameter D2 that is larger than an external diameter of the optical waveguide unit 3. For example, the internal width, in this case the internal diameter D2, of each microduct 2 can be about 8 mm in case the external diameter is about 10 mm (with a wall thickness of about 1 mm).

Each microduct 2 is preferably flexible or bendable, allowing ease of installation. Also, the microduct is preferably constructed such that its bending radius is limited. Preferably, a radial and longitudinal freedom of the waveguide unit 3 with respect to the microduct 2 is available, to make the waveguide unit 3 relatively resistant to rough installation practices.

Also, in the present embodiments, as will be explained below, a waveguide unit 3 is configured to be dragged in longitudinal direction through the respective microduct 2, by a fluid drag (of fluid flowing along the waveguide unit3). To this aim, a fluid supply unit U (schematically shown in Fig. 6) can be connected to the microduct 2, for feeding fluid therein. During operation, a fluid that is fed to and through the microduct 2 can act on a waveguide unit 3, to move (preferably blow) the unit 3 through the microduct 2, as is shown in Fig. 6. The fluid can be a gas or gas mixture, and is preferably air. Alternatively, a liquid is used to achieve the drag force.

Referring to Figures 2-6, in the present example, there is provided a plurality of the microducts 2, the ducts 2 being joined together. In the example, the microducts form a bundle of microducts 2, laid in parallel. Preferably, a length of the bundle is at least 0.5 km, for example at least 1 km. Particularly, the length of the bundle of microducts 2 is larger than the length of the main duct 1. After installation, the bundle of microducts 2 preferably reaches through the entire main duct 1 (from a first, proximal duct end to an opposite/distal second duct end).

The present bundle consists of three microducts 2. In another embodiment, the bundle can include more microducts 2, for example four, five, six, or more.

In the present bundle, the microducts 2 all have the same shape, particularly a cylindrical configuration, with both inner and outer surfaces with circular cross-sections. Each microduct 2 can also have a different shape, for example with an oval, trapezoid or otherwise angular cross-section. In yet a further embodiment (not depicted), one or more of the plurality of microducts can be shaped and/or dimensioned differently from one or more other of the plurality of microducts.

Also, according to a further embodiment, open ends of the various microducts 2 at each side of the bundle are located at substantially the same longitudinal position, being a respective common end of the bundle. Alternatively, distal and/or proximal ends of one or more microducts 2 of the bundle can be located remote from distal and/or proximal ends of one or more other microducts 2 of the bundle. As an example, the microducts 2 of the bundle can all have the same length, or they can have different lengths.

Again referring to the drawings, in this exemplary embodiment, the plurality of hollow microducts 2 have been positioned in a close-packed bundle (see Fig. 3), particularly in a mutually symmetrical relationship. In the present close-packed configuration, each of the microducts 2 directly contacts (at least) two of the other microducts of the bundle.

In addition, the plurality of microducts has been bundled by taping the microducts together, using self-adhesive tape 5. Fig. 2 shows an example of several tape sections 5, each of the tape sections 5 being wound around the microducts 2 to hold the ducts 2 together. Separate tape sections may be applied. Advantageously, tape 5 is applied over the substantially entire length of the bundle of microducts (for example over at least 90% of the length of the bundle, and preferably at least about 100% of that length), and more preferably in a substantially uninterrupted manner.

The tape 5 is preferably wound such that the tape only encloses part of an outer surface of the bundle of microducts 2 (i.e. subsequent tape windings do not overlap). Alternatively, the tape 5 can be wound such that the tape fully encloses the outer surface of the bundle of microducts 2 (i.e. subsequent tape windings do overlap, or adjoin each other).

In the present example, each of the microducts 2 has a predetermined external width D 1 (mentioned before), wherein the sum of the widths D1 of the plurality of microducts is larger than a width of an inner space of the main duct 1, for example by at least 5% and particularly by at least 10%. Alternatively, the sum of the widths D1 of the plurality of microducts 2 can be about the same as or smaller than the width of the inner space of the main duct 1.

The present bundle of microducts 2 is provided with an elongated element 4 (for example a cord, wire or rod). The elongated element 4 may be used for pulling the microducts 2 through the main duct 1. In addition, or alternatively, the elongated element 4 can serve for holding the microducts 2 together, for example in the mutually symmetrical (close packed) relationship, particularly in case all microducts 2 are fixed to the element 4. In the present example, said tape 5 additionally serves for holding the microducts 2 together.

As follows from the drawing, the elongated element 4 extends through the bundle, between opposite outer sides of the microducts 2. The elongated element 4 may be fixed to the all (three) adjoining microducts 2 using an adhesive, by a thermal fixation process, and/or or in a different manner.

For example, fixing the microducts 2 to the element 4 can be achieved by an adhesive. Adhesive can be applied continuously between a microduct 2 and elongate element 4, for example along the entire length of a contacting line between the microduct 2 and the element 4, or intermittently, for example with spaced-apart spots or sections of adhesive.

The elongated element 4 can have various configurations, and is preferably a relatively strong, flexible, massive element, for example having a width that is significantly smaller than the external diameter D 1 of each of the microducts 2. For example, the elongated element 4 can be relatively thin, wherein a width of the elongated element 4 is in the range of about 1-5 mm.

In the present embodiment, the elongated element 4 is dimensioned such that it tightly fits between the microducts 2 (see Fig. 3) when the microducts are in their joined (bundled) state. In the present configuration, the elongated element 4 directly contacts each of the microducts 2 after the bundle has been assembled.

In the example, the elongated element 4 extends along at least part of the microducts 2, in parallel therewith. The elongated element 4 preferably extends along the entire length of the microducts (i.e. of the bundle). For example, a length of the element 4 can be at least 0.5 km, particularly at least 1 km. The present elongated element 4 protrudes from at least one end of the bundle of microducts (see Fig. 2).

The elongated element 4 can provide a strengthening of the microduct-bundle. Thus, the elongated element 4 can be a bundle strengthening means, for example an elongated bundle strengthening core or rod. The present example includes a single elongated element 4 in the bundle; alternatively, the bundle of microducts 2 can be provided with a plurality of such elongated elements 4, for example a plurality of spaced-apart elongated elements 4. For example, the bundle can be provided with a plurality of elongated elements 4 that are spaced-apart viewed in a longitudinal bundle direction. In addition or alternatively, the bundle can be provided with a plurality of elongated elements 4 that are spaced-apart viewed in a transversal bundle direction.

Good results can be obtained in case the elongated element 4 is made of a relatively strong, durable yet light-weight material, for example a fiber reinforced material, for example a fiber-reinforced plastic, for example a glass fiber reinforced polymer. The elongated element can also be made of other materials, for example one or more metals, a fiber material, or different material(s).

The or each elongated element 4 can extend substantially centrally with respect to the plurality of microducts 2 (i.e. along a central axis of the bundle), as in the drawings, for example to providing a balanced, stable pulling means to pull the bundle through the main duct 1, and also to provide a relatively compact configuration. The elongated element 4 can also be positioned differently with respect to the microducts 2.

A bundle assembly stage can include a step of providing a plurality of loose, separate, hollow microducts 2, and interconnecting/joining the plurality of hollow microducts 2, for example using said tape 5 and/or the element 4, to form the bundle.

The elongated element 4 is preferably connected to the microducts 2 simultaneously, when the ducts 2 are joined together. Alternatively, the element 4 is applied to the bundle after the bundle of microducts 2 has been formed (in that case, for example, an element 4 can be fixed to an outer side of the bundled microducts).

Particularly in the case that a relatively long central elongated element 4 is to be applied, it is preferred that the microducts 2 are taped together (by the tape 5) during a joining of the microducts and the elongated element 4, or (just) after they have been joined.

In a most preferred embodiment, the tape 5 is applied over the entire length of the bundle of microducts, particularly without interruptions. In a further example, the tape extends uninterruptedly over at least 0.5 km length of the bundle of microducts 2, for example at least 1 km.

In a further advantageous, preferred embodiment, the tape 5 is wound around the joined microducts 2, for example such that the applied tape extends along at least one substantially helical path, the wound tape preferably extending along the substantially entire length of the bundle. In a further embodiment, a first self-adhesive tape is would around the microducts 2 in a first winding direction, wherein a second self-adhesive tape is would around the microducts 2 in a second winding direction, wherein the first winding direction and second winding direction are mutually opposite directions. The resulting wound tapes can cross each other at numerous locations along the bundle, and provide a strong, reliable positioning of the microducts 2.

After the bundle of microducts 2 has been formed, the bundle can be fed into and through the main duct 1. It should be observed that the assembly of the bundle can be carried out near the main duct 1, or elsewhere, for example at a central bundle assembly location.

In the present example, referring to figures 1 and 4, the use of the bundled microducts 2 (the bundle) may involve a main duct 1 that does enclose a signal transmission cable K. In that case, the signal transmission cable K can be removed from the main duct 1 (via a distal end of the main duct) before the microducts 2 are jointly installed (as a bundle) in the main duct 1, and/or during such installation.

For example, removal of the signal transmission cable K can be carried out simultaneously with feeding the bundle into the main duct 1 (see Fig. 4). To that aim, for example, the optical signal transmission cable K can be connected to a part of the elongated element 4 that protrudes from the bundle. Then, the cable K can be used to pull the bundle 2 and respective elongated element 4 through the main duct 1, by pulling the cable K through and out of the duct 1 in a direction X.

In an alternative, advantageous embodiment, the signal transmission cable K is not directly used for pulling the bundle of microducts 2 through the main duct 1. As an example, the signal transmission cable K can be removed from the main duct 1 first. Besides, use of the bundle of microducts 2 can involve providing a main duct 1 that does not include any signal transmission cable K. In that case (as is depicted in Fig. 5), the bundle of microducts 2 can be fed into and propelled through the main duct 1, using a fluid drag (of fluid flowing along the bundle 2) that is applied by a fluid force application unit/fluid supply unit U (known per se). The optional tape 5 can serve to provide drag enhancing means, enhancing the fluid drag force that is applied to the bundle 2.

It has been found that a relatively long bundle of microducts 2 (at least 1 km in length) can be dragged through a relatively long main duct 1 (at least 1 km in length) by an air drag force, applied by a conventional air blowing installation U, without the microducts blocking-up in the main duct 1.

The dragging of the bundle of microducts through the main duct 1 is particularly advantageous in the case that the main duct 1 is empty (i.e. without a signal transmission cable K), or does not include a pulling means. It should be observed that the dragging of the bundle of microducts through the main duct 1 using fluid drag can be carried out simultaneously with the removing of the signal transmission cable K from the main duct 1.

After the bundle of microducts 2 has been laid in the main duct, one or more of the microducts 2 can be provided with respective optical waveguide units 3, preferably in a known manner, using known blowing means, as has been described above. Referring to Fig. 6, for example, an optical waveguide unit 3 can be propelled through a said microduct 2 by a fluid flowing through the duct 1, using the blowing device, i.e. the fluid supply unit U (known per se).

In a preferred embodiment, a single fluid supply unit U is configured for propelling the microducts-bundle 2 through the main duct 1, and for propelling a waveguide unit 3 through a microduct 2 itself. For example, the blowing unit U can be provided with a first connecting means that can connect to the main duct 1, for feeding fluid therein and for propelling the bundle, and with a second connecting means to connect to a microduct 2 for feeding fluid therein to propel the waveguide unit 3.

Alternatively, different (dedicated) fluid supply units can be provided. For example a high capacity propelling unit can be used for feeding fluid at a relatively high flow rate (liter/minute) into the main duct 1 to drag the bundle 2 there-through. A low capacity propelling unit can be used, configured to feed a fluid with a second flow rate (liter/minute) into a microduct 2 (to drag a waveguide unit 3 there-through) which second flow rate is lower than the relatively high flow rate.

Although the illustrative embodiments of the present invention have been described in greater detail with reference to the accompanying drawings, it will be understood that the invention is not limited to those embodiments. Various changes or modifications may be effected by one skilled in the art without departing from the scope or the spirit of the invention as defined in the claims.

It is to be understood that in the present application, the term "comprising" does not exclude other elements or steps. Also, each of the terms "a" and "an" does not exclude a plurality. Any reference sign(s) in the claims shall not be construed as limiting the scope of the claims

## Claims

1. A method for installing an optical waveguide unit, comprising:
- providing a protective main duct (1);
- jointly feeding a plurality of hollow microducts (2) through the main duct (1); and
- feeding the optical waveguide unit (3) through a said microduct (2); wherein the plurality of microducts is connected to an elongated element (4) for reinforcing and/or mutually positioning the plurality of microducts (2), and for example for pulling the plurality of microducts (2) through the main duct (1).

2. The method according to claim 1, wherein the elongated element (4) extends along at least part of the microducts (2), and preferably along the entire length if the microducts (2).

3. The method according to claim 1 or 2, wherein the elongated element (4) extends substantially centrally with respect to the plurality of microducts.

4. The method according to any of claims 1-3, wherein the elongated element (4) is made of a fiber reinforced material, for example a fiber-reinforced plastic, for example a glass fiber reinforced polymer.

5. The method according to any of the preceding claims, wherein the main duct (1) encloses a signal transmission line (K) before the microducts (2) are fed through the main duct (1), wherein the signal transmission line (K) is removed from the main duct (1) before and/or during installing the microducts (2) in the main duct (1).

6. The method according to claim 5, wherein the signal transmission line (K) is used to pull the plurality of microducts through the main duct (1), wherein the signal transmission line (K) is preferably connected to said elongated element (4), wherein a part of the elongated element (4) preferably protrudes from the plurality of microducts, in which case the signal transmission line (K) is preferably connected to that protruding part of the elongated element (4).

7. Kit of parts, containing a plurality of hollow microducts (2) specifically configured for use in a method according to any of the preceding claims, the kit of parts further including attachment means (4, 5) for joining the plurality of microducts, wherein the attachment means include an elongated element (4) for reinforcing and/or mutually positioning the plurality of microducts (2).

8. Kit of parts according to claim 7, wherein the attachment means include tape (5), an adhesive, or a combination thereof.

9. A bundle of microducts, joined together by attachment means (4, 5), for example a bundle to be used in a method according to any of claims 1-6, wherein the bundle is provided with at least one elongated element (4), preferably extending between the microducts, for example centrally through the bundle.

10. The bundle according to claim 9, wherein the microducts (2) are - positioned in a close-packed bundle and/or in a mutually symmetrical relationship.

11. The bundle according to any of claims 9-10, wherein the element (4) is made of a fiber reinforced material, for example a fiber-reinforced plastic, for example a glass fiber reinforced polymer.

12. The bundle according to any of claims 9-11, wherein each of the microducts (2) is fixed to the elongated element (4) by an adhesive.

13. The bundle according to any of claims 9-12, including at least tape (5), preferably self-adhesive tape (5), at least partly enclosing the microducts (2).

14. The bundle according to claim 13, wherein the tape (5) has been wound around the microducts (2) in at least one winding direction.

15. The bundle according to claim 13 or 14, wherein the tape extends along substantially the entire length of the bundle.
